# EUROPEAN PATENT APPLICATION

(11) **EP 4 769 511 A1**
(43) Date of publication of application: **01.07.2026**
(21) Application number: 25177417.0
(22) Date of filing: 19.05.2025
(51) Int. Cl.: H01M 4/13, H01M 4/133, H01M 4/134, H01M 4/139, H01M 4/1393, H01M 4/1395, H01M 4/36, H01M 4/38, H01M 4/48, H01M 4/587, H01M 4/62, H01M 10/0525, H01M 4/02

(54) **NEGATIVE ELECTRODE ACTIVE MATERIAL, NEGATIVE ELECTRODE SHEET AND LITHIUM-ION BATTERY CONTAINING THE SAME**

(30) Priority: 27.12.2024 CN 202411960650; 25.01.2025 WO PCT/CN2025/075045
(71) Applicant: Eve Energy Co., Ltd., Huizhou, Guangdong 516006 (CN)
(72) Inventor: XIE, Yingpeng, Huizhou, 516006 (CN); JI, Yajuan, Huizhou, 516006 (CN); ZHAO, Ruirui, Huizhou, 516006 (CN)
(74) Representative: Mewburn Ellis LLP

(57) **Abstract**

Provided in the present application is a negative electrode active material, a negative electrode sheet and a lithium-ion battery containing the same. The negative electrode active material includes a silicon-based material and a coating layer disposed on a surface of the silicon-based material, in which the coating layer contains a copolymer including: a first monomer as shown in Formula I; and a second monomer as shown in Formula II; X in the Formula I and Y in the Formula II independently contain at least one of an aryl group and an alkenyl group.

## Description

### TECHNICAL FIELD

The present application relates to the technical field of batteries, and in particular to a negative electrode active material, a negative electrode sheet and a lithium-ion battery containing the same.

### BACKGROUND

With the rapid development of mobile electronic devices, electric vehicles, and grid energy storage, developing lithium-ion batteries with high energy density, high power density, long cycle life, and high safety remains a key research focus in energy storage. Developing negative electrode active materials with high capacity, high rate capability, and long cycling stability is a crucial pathway to achieve this goal. Silicon-based materials have attracted extensive attention due to their abundant reserves and extremely high theoretical charge specific capacity.

However, silicon materials undergo significant volume expansion (>300%) during charge/discharge processes, exhibit inherent low conductivity, and suffer from rapid capacity degradation during cycling, failing to meet practical application requirements.

### SUMMARY

According to a first aspect of the present disclosure, provided is a negative electrode active material, including a silicon-based material and a coating layer disposed on a surface of the silicon-based material, the coating layer contains a copolymer including: a first monomer as shown in Formula I; and a second monomer as shown in Formula II; 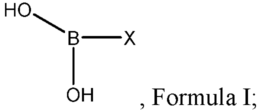 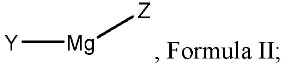
X in the Formula I and Y in the Formula II independently contain at least one of an aryl group and an alkenyl group; and
Z in the Formula II is selected from one of -Cl, -Br, -I.

According to a second aspect of the present disclosure, provided is a preparation method of the aforementioned negative electrode active material, including the following steps:
S1: co-polymerizing the first monomer with the second monomer to prepare a copolymer;
S2: utilizing the copolymer to formulate a copolymer solution; and
S3: applying the copolymer solution to the surface of the silicon-based material, and drying the copolymer solution on the surface of the silicon-based material to form the coating layer on the surface of the silicon-based material.

According to a third aspect of the present disclosure, provided is a negative electrode sheet, the negative electrode sheet includes a negative current collector and a negative electrode active coating disposed on the surface of the negative current collector, and the negative electrode active coating includes the aforementioned negative electrode active material or a negative electrode active material prepared by the aforementioned preparation method of the negative electrode active material.

According to a fourth aspect of the present disclosure, provided is a lithium-ion battery, and the lithium-ion battery includes the aforementioned negative electrode sheet.

In the negative electrode active material provided in the present disclosure, a copolymer formed by a first monomer shown in Formula I and a second monomer as shown in Formula II after a co-polymerization reaction is employed to coat the silicon-based material. There are following effects:

Firstly, as the silicon-based material is susceptible to expansion during the charging and discharging process, the copolymer formed by employing the first monomer shown in Formula I and the second monomer shown in Formula II exhibits good flexibility, and the copolymer coating of the silicon-based material can play a good buffering effect on the volume expansion of the silicon-based material during the charging and discharging process, so as to render the negative electrode active material less susceptible to rupture during the expansion process, and then improve the cycle life and cycle capacity retention rate of the negative electrode active material during the actual use of the material. The cycle life and cycle capacity retention rate of the negative electrode active material in the actual use process are improved.

Secondly, the coating of the silicon-based material employing the aforementioned copolymer can improve the structural stability and chemical stability of the negative electrode active material, thereby reducing the constant generation of an unstable SEI film on the surface of the negative electrode sheet due to the volume expansion of the silicon.

Thirdly, as the silicon based material itself has a low electronic conductivity, the coating layer formed by coating the silicon-based material using the above copolymer can improve the electrical conductivity of the negative electrode active material to a certain extent, thereby improving the rate performance of the negative electrode active material, so that the lithium-ion battery to which the negative electrode active material provided in the present application is applied has an excellent quick-charging performance.

### DETAILED DESCRIPTION

**In** some implementations, a structure of the first monomer is as shown in Formula III, and a structure of the second monomer is as shown in Formula IV;

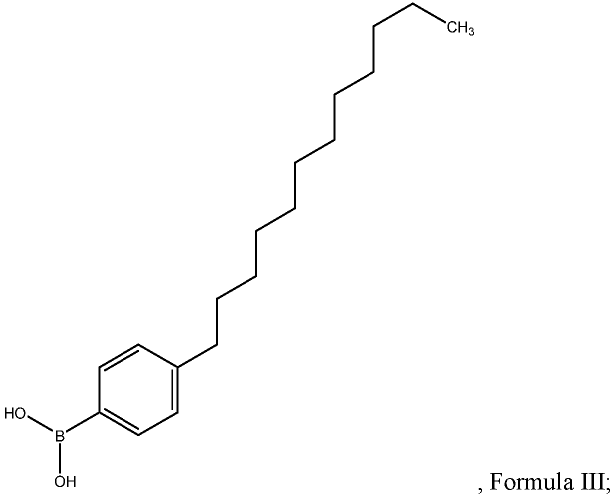

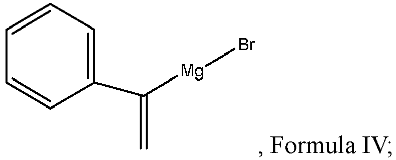

The first monomer, as shown in formula III, contains a dodecane long chain, which has good flexibility. The second monomer, as shown in formula IV, contains a benzene ring, which is rigid. The copolymer formed by co-polymerization reaction of the first monomer shown in Formula III and the second monomer shown in Formula IV contains both dodecane long chain and benzene ring, and thus the copolymer has both good flexibility and rigidity. The copolymer is employed to obtain a negative electrode active material after coating a silicon-based material, and the coating layer is capable of improving both the buffering effect on the volume expansion of silicon during the charging and discharging process and the flexibility of the negative electrode sheet to which the negative electrode active material is applied, which is conducive to reducing the risk of peeling off of the negative electrode active coating containing the negative electrode active material. The above two effects extend the cycle life of the lithium-ion battery to which the negative electrode active material is applied, so that the capacity retention rate of the lithium-ion battery can still be maintained at a high level after multiple cycles of charging and discharging.

In some implementations, a number-average molecular weight of the copolymer is 4,000 to 50,000.

The number-average molecular weight of the copolymer employed to form the coating layer is controlled to be within the range of 4,000 to 50,000; firstly, it is possible to keep the bonding strength of the coating layer within a suitable range, which is conducive to lowering the risk of the coating layer peeling off or stripping off of the negative electrode active material during multiple cycles of charging and discharging; secondly, it enables the coating layer to have good mechanical strength, which can improve the buffering effect of the coating layer on the volume expansion of silicon during the charging and discharging process of the negative electrode active material; and thirdly, the coating layer is made to have good uniformity and denseness, which can improve the cycling stability of the negative electrode active material in the charging and discharging process.

If the number-average molecular weight of the copolymer employed to form the coating layer is too low, the adhesive strength of the coating layer is insufficient, the coating layer is susceptible to peeling off or stripping off during cycles of charging and discharging, and the mechanical strength of the copolymer is relatively weak; if the number-average molecular weight of the copolymer employed to form the coating is too great, the solubility of the copolymer in organic solvents is poor, which leads to an increase in the difficulty of the coating, and also affects the homogeneity and densification of the coating layer.

In some implementations, a mole ratio of the first monomer to the second monomer is in a range of (1-1.2): 1.

By controlling the mole ratio of the first monomer and the second monomer in the copolymer employed to form the coating layer within the above range, it is possible to provide the coating layer prepared from the copolymer formed by the copolymer of the first monomer and the second monomer through the co-polymerization reaction with good mechanical strength and flexibility, and to reduce the risk of the coating layer being cracked due to the volume expansion of the silicon-based material during the charging and discharging process of the negative electrode active material.

If the mole ratio of the first monomer to the second monomer is too great, that is, the first monomer is too much, although the flexibility of the coating layer is good but its rigidity is poor, and the coating layer is prone to cracking; if the mole ratio of the first monomer to the second monomer is too low, that is, the first monomer is too little, although the coating layer is rigid, the coating layer is susceptible to silicon expansion and cracking.

In some implementations, a mass percentage of the coating layer in the negative electrode active material is in a range of 2% to 8%.

In some implementations, a thickness of the coating layer is in a range of 10 to 130 nm.

Controlling the mass percentage and thickness of the coating layer within the above range can improve the lithium-ion transport performance, rate performance, and cycling performance of the negative electrode active material, and the coating layer has good flexibility.

If the mass ratio of the coating layer is too low and the thickness is too thin, the coating layer is prone to rupture after multiple cycles of charging and discharging, which leads to the loss of active lithium; if the mass percentage of the coating layer is too large and the thickness is too thick, it will lead to an inferior ion transport performance of the negative electrode active material, resulting in a decrease in its rate performance and cycling performance.

In some implementations, a particle size D₅₀ of the negative electrode active material is 4 to 9 µm.

In some implementations, a specific surface area of the negative electrode active material is 1 to 8 m²/g.

Controlling the specific surface area of the negative electrode active material within the above range can improve the stability of the negative electrode active material so that its capacity can be better performed during the cycling charging and discharging process.

If the specific surface area of the negative electrode active material is too small, its contact area with the electrolyte is too small, which may lead to high internal resistance of the lithium-ion battery to which the negative electrode active material is applied, thereby rendering the negative electrode active material susceptible to limited performance; if the specific surface area of the negative electrode active material is too large, the negative electrode active material is more prone to clustering during the preparation of the negative electrode sheet, which leads to more difficulties in the dispersion of the material and thus affects the performance of the negative electrode sheet.

By coating a silicon-based material with a copolymer formed by a first monomer and a second monomer through a co-polymerization reaction, the present application provides the negative electrode active material with good structural and chemical stability, improves the cycling performance and quick charging performance of lithium-ion batteries to which the negative electrode active material is applied, and enables the lithium-ion batteries to maintain a high capacity retention rate after multiple charging and discharging cycles, thereby improving the cycling lifespan of the batteries.

In some implementations, the aforementioned copolymer is prepared by following steps in the step S1:
S1-1: mixing the first monomer, the second monomer with alkali and catalyst and then reacting with reflux under inert gas protective atmosphere for 5 to 12 hours, to produce a prepolymer; and
S1-2: mixing the prepolymer with organic solvent and initiator and then reacting under inert gas protective atmosphere at 40 to 100°C for 3 to 12 hours, to prepare the copolymer.

In the present proposal, the first monomer and the second monomer are coupled in the presence of alkali and catalyst by Suzuki Coupling reaction, and then an initiator is added to cause the double bond to be opened and a copolymerization reaction to prepare a copolymer. The performance of the copolymer prepared by the aforementioned method is much better, and the application of the copolymer to the coating layer is able to improve the structural stability, chemical stability, and rate performance and cycling performance of the negative electrode active material.

In some implementations, the step S1-2 includes the following operations: mixing the prepolymer with organic solvent and initiator and then reacting under inert gas protective atmosphere at 40 to 100°C for 3 to 12 hours to obtain a reaction solution, adding the reaction solution to a precipitating solvent to obtain a copolymer precipitation, washing and drying to obtain the copolymer.

In some implementations, in step S1-2, the precipitating solvent includes at least one of propanol, isopropanol, and acetone.

In some implementations, in step S1, an amount of the initiator is 0.1% to 0.9% of a total mass of the first monomer and the second monomer.

In some implementations, in step S1-1, the alkali includes at least one of sodium carbonate, potassium carbonate, potassium phosphate, and sodium bicarbonate.

In some implementations, in step S1-1, the catalyst includes at least one of Pd(dppf)Cl₂ and Pd(PPh₃)₄.

In some implementations, in step S1-2, the organic solvent includes at least one of benzene, toluene, tetrahydrofuran (THF), N,N-dimethylformamide (DMF).

In some implementations, in step S1-2, the initiator includes at least one of 2,2'-Azobis(2-methylpropionitrile), 2,2'-Azobis-(2,4-dimethylvaleronitrile), and benzoyl peroxide (BPO).

In some implementations, in step S2, a mass fraction of the copolymer in the copolymer solution is 3% to 20%.

In some implementations, the step S3 includes the following operations: mixing the silicone-based material with the copolymer solution and stirring at 30 to 80 °C for 4 to 10 hours to obtain the mixture, and spray-drying the mixture to prepare the negative electrode active material.

In some implementations, in step S3, an inlet temperature of spray drying is 100 to 200 °C and an outlet temperature of 60 to 90 °C.

In some implementations, the silicon-based material includes at least one of silicon monoxide (SiO) and silicon-carbon material (SiC).

In some implementations, the silicon-carbon material includes a porous carbon skeleton, a silicon layer, and a carbon layer, the porous carbon skeleton including an inner region and an outer region wrapped around the inner region, the inner region having a plurality of inner pores, the outer region having a plurality of outer pores, the silicon layer being provided on an inner wall of the inner pores and the outer pores, and the carbon layer being provided on a surface of the silicon layer in the outer pores to enable the silicon-carbon particles to have inner pores in the inner region and outer pores in the outer region.

In some implementations, in the inner and outer pores of the silicon-carbon material, the proportion of mesopores is 42% to 86%, and the proportion of micropores is less than 58%, in which a pore diameter of mesopores ranges from 3 to 40 nm, and a pore diameter of micropores ranges from 0.5 to 2 nm.

Applying the negative electrode active material provided in the present disclosure to the negative electrode sheet causes the negative electrode sheet to have good flexibility, plays a certain buffering effect on the volume expansion of the negative electrode active material during charging and discharging, reduces the expansion rate of the negative electrode sheet, and at the same time improves the cycling performance and the rate performance of the negative electrode sheet.

Applying the negative electrode active material provided in the present disclosure to a negative electrode sheet, and the negative electrode sheet being applied to a lithium-ion battery, is conducive to improving the cycling performance and the rate performance of the lithium-ion battery.

### Example 1

The lithium-ion battery was prepared by the following steps:

### 1. Preparation of the negative electrode sheet

Negative electrode active material, conductive agent of conductive carbon black (SP), single-walled carbon nanotubes (SWCNT), binder of polyacrylic acid (PAA) were mixed in accordance with a mass ratio of 80:9:1:10 and then added to a solvent of deionized water, and then mixed uniformly to prepare a negative electrode slurry with a solid content of 30%, and then the negative electrode slurry was coated on both surfaces of copper foil of negative current collector to form a negative electrode active coating, and then dried in vacuum and cold pressed to prepare a negative electrode sheet.

The aforementioned negative electrode active material includes a silicon-based material and a coating layer disposed on a surface of the silicon-based material, in which the coating layer contains a copolymer including a first monomer as shown in Formula III and a second monomer as shown in Formula IV; 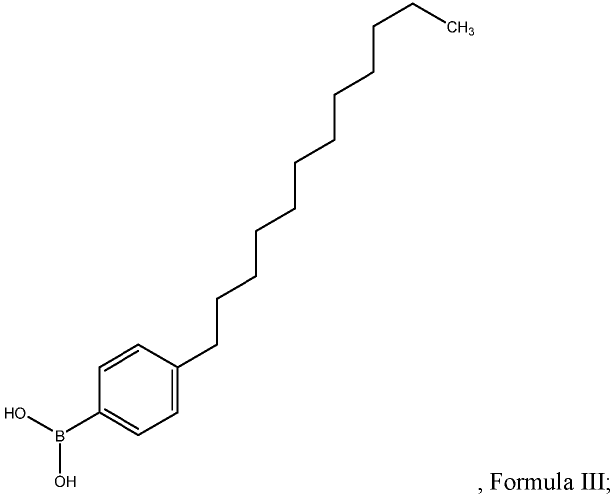 and

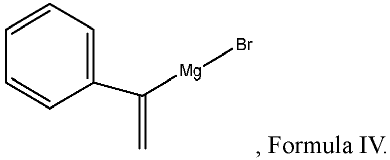

The aforementioned negative electrode active material was prepared by the following steps:
S1: The first monomer and the second monomer were mixed in accordance with a mole ratio of 1:1 and added to an organic solvent of THF, sodium bicarbonate and Pd (PPh3) 4 were added, and the reaction was heatedd to reflux under argon protection for 8 hours to obtain the prepolymer solution, which was diluted with ethyl acetate after cooled, and then washed with saline, dried, filtered, and concentrated to obtain a concentrate. The concentrate was added to ethyl acetate/hexane and recrystallized to obtain a prepolymer, the prepolymer was mixed with THF and 2,2'-Azobis(2-methylpropionitrile) and then reacted under argon protection at 70 °C for 8 hours to obtain a reaction solution, the reaction solution was added to propanol to obtain copolymer precipitate, and then washed and dried to obtain the copolymer with a number-average molecular weight of 20,000 to 22,000.
S2: The copolymer was formulated by dissolving the copolymer in THF to obtain a copolymer solution with a mass fraction of 12%.
S3. The silicon-based material was added to the copolymer solution and stirred at 50 °C for 7 hours to obtain a mixture, and the mixture was spray-dried to form a coating layer with a thickness of 70 nm on the surface of the silicon-based material to obtain a negative electrode active material with a particle size D₅₀ of 6 µm, in which a mass percentage of the coating layer in the negative electrode active material was 5%, and the inlet temperature of the spray-drying was 150 °C, and the outlet temperature was 75 °C.

The silicon-based material employed in the present example is a silicon-carbon material.

### 2. Preparation of the negative electrode sheet

The positive active material LiNi_{0.8}Co_{0.1}Mn_{0.1}O₂, the conductive agent of conductive carbon black (SP) and the binder of polyvinylidene fluoride (PVDF) were mixed in accordance with a mass ratio of 96:2:2 and then added to a solvent of N-methylpyrrolidone (NMP), mixed homogeneously, and a positive slurry with a solid content of 45% was made, and the positive slurry was coated on both surfaces of aluminum foil of a positive current collector to form a positive electrode active coating, and after vacuum drying and cold pressing, a positive electrode sheet was prepared.

### 3. Preparation of the separator

A polyethylene (PE) film containing a ceramic layer is employed as the separator.

### 4. Preparation of the electrolyte

Ethylene carbonate (EC), dimethyl carbonate (DMC), diethyl carbonate (DEC), and fluorinated ethylene carbonate (FEC) were mixed in accordance with a mass ratio of 20:40:30:10 to obtain an organic solvent, and then a fully-dried lithium salt, LiPF6, was dissolved in the organic solvent and formulated into an electrolyte of 1 M concentration.

### 5. Assembly of the lithium-ion battery

The aforementioned positive electrode sheet, separator, and negative electrode sheet were stacked in order, so that the separator was located between the positive and negative electrode sheets to play a role of isolation, and then were wound to obtain a bare cell. The bare cell was placed in an outer packaging housing, and was dried, then the aforementioned electrolyte was injected into the housing, and after being vacuum packaged, stood aside, formed, shaped and other processes, the lithium-ion battery was obtained.

### Example 2

Provided in the present example is a lithium-ion battery, constituting a difference compared to Example 1 in that: The preparation method of the negative electrode active material employed in the negative electrode sheet is different.

The negative electrode active material employed in the present example was prepared by the following steps:
S1: The first monomer and the second monomer were mixed in accordance with a mole ratio of 1.1:1 and added to an organic solvent of THF, and sodium bicarbonate and Pd (PPh3) 4 were added, and the reaction was heated to reflux under argon protection for 5 hours to obtain the prepolymer solution, which was diluted with ethyl acetate after cooled, and then washed with saline, dried, filtered, and concentrated to obtain a concentrate. The concentrate was added to ethyl acetate/hexane and recrystallized to obtain the prepolymer, the prepolymer was mixed with THF and 2,2'-Azobis(2-methylpropionitrile) and then reacted under argon protection at 40 °C for 12 hours to obtain a reaction solution, the reaction solution was added to propanol to obtain copolymer precipitate, and then washed and dried to obtain the copolymer with a number-average molecular weight of 4000 to 6000.
S2: The copolymer was formulated by dissolving the copolymer in THF to obtain a copolymer solution with a mass fraction of 3%.
S3. The silicon-based material was added to the copolymer solution and stirred at 30 °C for 10 hours to obtain a mixture, and the mixture was spray-dried to form a coating layer with a thickness of 10 nm on the surface of the silicon-based material to obtain a negative electrode active material with a particle size D₅₀ of 4 µm, in which a mass percentage of the coating layer in the negative electrode active material was 2%, and the inlet temperature of the spray-drying was 200 °C, and the outlet temperature was 90 °C.

Except for the above differences, the materials, formula ratios and preparation operations employed in the present example were strictly consistent with those of Example 1.

### Example 3

Provided in the present example is a lithium-ion battery, constituting a difference compared to Example 1 in that: The preparation method of the negative electrode active material employed in the negative electrode sheet was different.

The negative electrode active material employed in the present example was prepared by the following steps:
S1: The first monomer and the second monomer were mixed in accordance with a mole ratio of 1.2:1 and added to an organic solvent of THF, and sodium bicarbonate and Pd (PPh3) 4 were added, and the reaction was heated to reflux under argon protection for 12 hours to obtain the prepolymer solution, which was cooled and then diluted with ethyl acetate, and then washed with saline, dried, filtered, and concentrated to obtain a concentrate. The concentrate was added to ethyl acetate/hexane and recrystallized to obtain the prepolymer, the prepolymer was mixed with THF and 2,2'-Azobis(2-methylpropionitrile) and then reacted under argon protection at 100 °C for 3 hours to obtain a reaction solution, the reaction solution was added to propanol to obtain copolymer precipitate, and then washed and dried to obtain the copolymer with a number-average molecular weight of 48000 to 50000.
S2: The copolymer was formulated by dissolving the copolymer in THF to obtain a copolymer solution with a mass fraction of 20%.
S3. The silicon-based material was added to the copolymer solution and stirred at 80 °C for 4 hours to obtain a mixture, and the mixture was spray-dried to form a coating layer with a thickness of 130 nm on the surface of the silicon-based material to obtain a negative electrode active material with a particle size D₅₀ of 9 µm, in which a mass percentage of the coating layer in the negative electrode active material was 8%, and the inlet temperature of the spray-drying was 100 °C, and the outlet temperature was 60 °C.

Except for the above differences, the materials, formula ratios and preparation operations employed in the present example were strictly consistent with those of Example 1.

### Example 4

Provided in the present example is a lithium-ion battery, constituting a difference compared to Example 1 in that: The copolymer contained in the coating layer in the negative electrode active material was different, and the first monomer employed therein was as shown in Formula V;

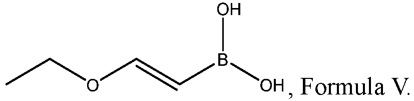

Except for the above differences, the materials, formula ratios and preparation operations employed in the present example were strictly consistent with those of Example 1.

### Example 5

Provided in the present example is a lithium-ion battery, constituting a difference compared to Example 1 in that: The copolymer contained in the coating layer in the negative electrode active material was different, and the first monomer employed therein was as shown in Formula VI;

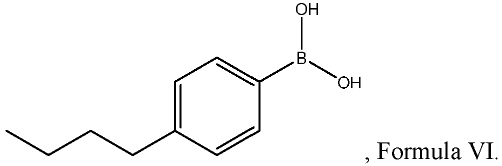

Except for the above differences, the materials, formula ratios and preparation operations employed in the present example were strictly consistent with those of Example 1.

### Example 6

Provided in the present example is a lithium-ion battery, constituting a difference compared to Example 1 in that: The copolymer contained in the coating layer in the negative electrode active material was different, and the first monomer employed therein was as shown in Formula VII;

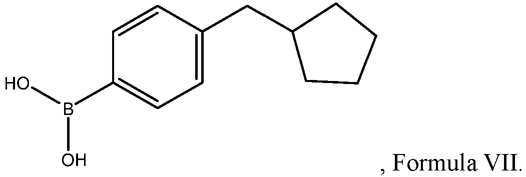

Except for the above differences, the materials, formula ratios and preparation operations employed in the present example were strictly consistent with those of Example 1.

### Example 7

Provided in the present example is a lithium-ion battery, constituting a difference compared to Example 1 in that: The copolymer contained in the coating layer in the negative electrode active material was different, and the second monomer employed therein was as shown in Formula VIII;

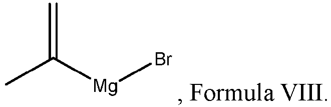

Except for the above differences, the materials, formula ratios and preparation operations employed in the present example were strictly consistent with those of Example 1.

### Example 8

Provided in the present example is a lithium-ion battery, constituting a difference compared to Example 1 in that: The copolymer contained in the coating layer in the negative electrode active material was different, and the second monomer employed therein was as shown in Formula IX;

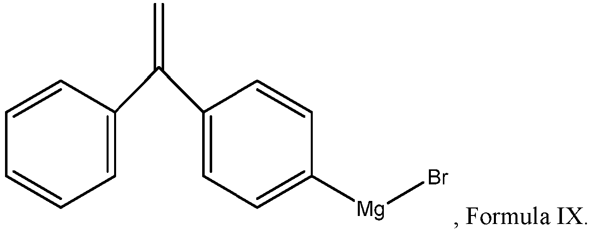

Except for the above differences, the materials, formula ratios and preparation operations employed in the present example were strictly consistent with those of Example 1.

### Example 9

Provided in the present example is a lithium-ion battery, constituting a difference compared to Example 1 in that: In step S1 of the preparation of the negative electrode active material, the prepolymer was mixed with THF and 2,2'-Azobis(2-methylpropionitrile) and then reacted under argon protection at 70 °C for 2 hours, and the number-average molecular weight of the copolymer prepared was 2,000 to 3,000.

Except for the above differences, the materials, formula ratios and preparation operations employed in the present example were strictly consistent with those of Example 1.

### Example 10

Provided in the present example is a lithium-ion battery, constituting a difference compared to Example 1 in that: In step S1 of the preparation of the negative electrode active material, the prepolymer was mixed with THF and 2,2'-Azobis(14-methylpropionitrile) and then reacted under argon protection at 70 °C for 14 hours, and the number-average molecular weight of the copolymer prepared was 52000 to 54000.

Except for the above differences, the materials, formula ratios and preparation operations employed in the present example were strictly consistent with those of Example 1.

### Example 11

Provided in the present example is a lithium-ion battery, constituting a difference compared to Example 1 in that: (1) In step S2 of the preparation of the negative electrode active material, the mass fraction of the copolymer solution was 1%; (2) in step S3 of the preparation of the negative electrode active material, the particle size D₅₀ of the finally prepared negative electrode active material was 2 µm, the thickness of the formed coating layer was 7 nm, and the mass percentage of the coating layer in the negative electrode active material was 1%.

Except for the above differences, the materials, formula ratios and preparation operations employed in the present example were strictly consistent with those of Example 1.

### Example 12

Provided in the present example is a lithium-ion battery, constituting a difference compared to Example 1 in that: (1) In step S2 of the preparation of the negative electrode active material, the mass fraction of the copolymer solution was 25%; (2) in step S3 of the preparation of the negative electrode active material, the particle size D₅₀ of the finally prepared negative electrode active material was 12 µm, the thickness of the formed coating layer was 150 nm, and the mass percentage of the coating layer in the negative electrode active material was 12%.

Except for the above differences, the materials, formula ratios and preparation operations employed in the present example were strictly consistent with those of Example 1.

### Comparative Example 1

Provided in the present comparative example is a lithium-ion battery, constituting a difference compared to Example 1 in that: The negative electrode active material employed in the preparation of the negative electrode sheet was a silicon-based material without a coating layer.

Except for the above differences, the materials, formula ratios and preparation operations employed in the present comparative example were strictly consistent with those of Example 1.

### Comparative Example 2

Provided in the present comparative example is a lithium-ion battery, constituting a difference compared to Example 1 in that: In the preparation process of the negative electrode sheet, the coating layer in the negative electrode active material employed contained only the first monomer as shown in Formula III, and did not contain the second monomer as shown in Formula IV, i.e., the first monomer as shown in Formula III was employed for coating the silicon-based material, specifically, the first monomer as shown in Formula III and THF were employed to formulate a monomer solution with a mass fraction of 12%, and the silicon-based material was mixed with the monomer solution and then carried out spray drying to prepare the negative electrode active material.

Except for the above differences, the materials, formula ratios and preparation operations employed in the present comparative example were strictly consistent with those of Example 1.

### Comparative Example 3

Provided in the present comparative example is a lithium-ion battery, constituting a difference compared to Example 1 in that: In the preparation process of the negative electrode sheet, the coating layer in the negative electrode active material employed contained only the second monomer as shown in Formula IV, and did not contain the first monomer as shown in Formula III, i.e., the second monomer as shown in Formula IV was employed for coating the silicon-based material, specifically, the second monomer as shown in Formula IV and THF were employed to formulate a monomer solution with a mass fraction of 12%, and the silicon-based material was mixed with the monomer solution and then carried out spray drying to prepare the negative electrode active material.

Except for the above differences, the materials, formula ratios and preparation operations employed in the present comparative example were strictly consistent with those of Example 1.

### Comparative Example 4

Provided in the present comparative example is a lithium-ion battery, constituting a difference compared to Example 1 in that: The material components in the coating layer of the negative electrode active material were different, and the coating layer contained a first monomer as shown in Formula X and a second monomer as shown in Formula XI; 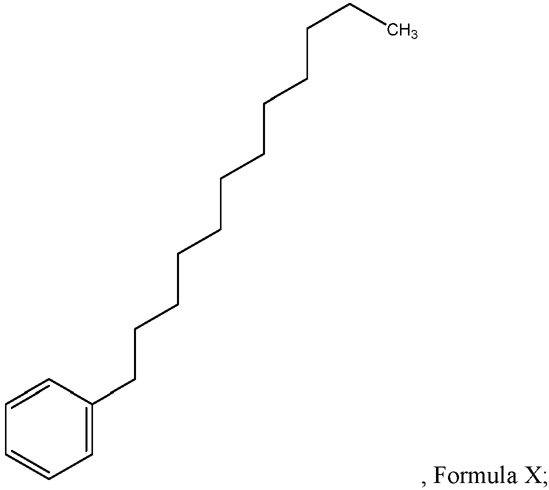 and

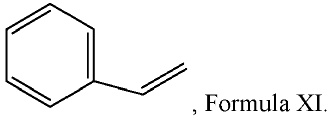

The negative electrode active materials employed in the present comparative example were prepared by the following steps:
S1: The first monomer and the second monomer were mixed in accordance with a mole ratio of 1:1 and dissolved in THF to obtain a monomer solution with a mass fraction of 12%.
S2. The silicon-based material was added to the monomer solution and stirred at 50 °C for 7 hours to obtain a mixture, and the mixture was spray-dried to form a coating layer with a thickness of 70 nm on the surface of the silicon-based material to obtain a negative electrode active material with a particle size D50 of 6 µm.

Except for the above differences, the materials, formula ratios and preparation operations employed in the present comparative example were strictly consistent with those of Example 1.

### Test Example

### 1. Test Objects

In the present test example, lithium-ion batteries prepared by Examples 1 to 12 and Comparative Examples 1 to 4 were employed as the test objects to perform the relevant performance tests.

### 2. Test Items

### (1) Initial Coulombic Efficiency

The lithium-ion batteries were charged to 4.2 V at constant current and voltage at a rate of 0.33 C for 10 minutes at 25 °C, followed by discharging the lithium-ion batteries at constant current to 2.5 V at a rate of 0.33 C for 10 minutes, and then the lithium-ion batteries were allowed to stand for 10 minutes, and the Initial Coulombic Efficiency of the lithium-ion batteries was calculated. Initial Coulombic Efficiency (%) = total first discharge capacity of lithium-ion battery at a rate of 0.33 C/total first charge capacity of lithium-ion battery at a rate of 0.33 C × 100%

### (2) Capacity Retention Rate (%) at room temperature and a rate of 1 C/1 C after 1200 cycles

Under the condition of 25 °C, the lithium-ion battery was charged to 4.2 V with constant current and voltage at a rate of 1 C, with a cutoff current of 0.05 C, and left to stand for 10 minutes, and then the lithium-ion battery was discharged to 2.5 V at a rate of 1 C, and left to stand for 10 minutes, and this was regarded as one charging and discharging cycle, and the lithium-ion battery was performed 1,200 charging and discharging cycles in accordance with the above process, and the capacity retention rate after 1,200 charging and discharging cycles of the lithium-ion battery at 1 C/1 C was calculated. Capacity Retention Rate (%) of lithium-ion battery after N cycles = (Discharge capacity of the Nth cycle/first discharge capacity) × 100%, N is the number of cycles of lithium-ion battery.

### (3) Constant Current Charge ratio at a rate of 6C at room temperature

Under the condition of 25 °C, the lithium battery was discharged to 2.5 V with constant current at a rate of 1C, and left to stand for 10 minutes, then the lithium battery was charged to 4.2 V with constant current and voltage at a rate of 6 C, with a cut-off current of 0.05 C, and left to stand for 10 minutes, and the capacity Q1 charged into the lithium battery by constant current at 6C, the total capacity Q2 charged into the lithium battery by constant current and voltage at 6C and the highest temperature in the process of quick-charging were recorded (i.e., the highest temperature of the charging at a rate of 6C). The constant current charge ratio at a rate of 6 C was calculated in accordance with the following formula: constant current charge ratio at a rate of 6C = the charge capacity Q1 with constant current at a rate of 6C / the total charge capacity Q2 with constant current and voltage at a rate of 6C × 100%, where the total charge capacity Q2 with constant current and voltage = the charge capacity with constant current + the charge capacity with constant voltage.

### (4) Discharge Capacity Retention Rate at a rate of 1C/10C at room temperature

The graded lithium-ion battery was charged to 4.2 V with constant current and voltage at a cutoff current of 0.05 C at 25 °C at a rate of 1 C, left to stand for 10 minutes, and then discharged to 2.5 V with constant current at a rate of 1C, and the discharged capacity, Q_{1C}, was recorded as the discharge initial capacity; Then the lithium-ion battery was charged to 4.2 V with constant current and voltage at a cutoff current of 0.05 C at 25 °C at a rate of 1 C, left to stand for 10 minutes, and then the fully charged lithium-ion battery was discharged to 2.5 V with constant current at a rate of 10 C, and the discharge capacity, Q_{10C}, was recorded; The discharge capacity retention rate of the lithium-ion battery at a rate of 1C/10C is calculated in accordance with the following formula: Discharge capacity retention rate (%) = Discharge capacity Q_{10C} at a rate of 10C / Discharge capacity Q_{1C} at a rate of 1C ×100%.

### 3. Test results

**Table 1 Relevant performance test results of lithium-ion batteries**

| Groups | Initial Coulombic Efficiency (%) | Capacity Retention Rate (%) at room temperature and a rate of 1C/1C after 1200 cycles | Constant Current Charge ratio (%) at a rate of 6C | Discharge Capacity Retention Rate (%) at a rate of 1C/10C |
|---|---|---|---|---|
| Example 1 | 82.1 | 85.6 | 80.5 | 85.8 |
| Example 2 | 81.9 | 84.8 | 80.1 | 84.9 |
| Example 3 | 81.7 | 85.1 | 79.8 | 84.8 |
| Example 4 | 80.7 | 82.8 | 77.6 | 82.1 |
| Example 5 | 80.1 | 82.1 | 76.8 | 81.7 |
| Example 6 | 79.6 | 80.2 | 75.8 | 81.0 |
| Example 7 | 79.3 | 78.1 | 75.9 | 80.2 |
| Example 8 | 78.8 | 80.1 | 78.1 | 83.5 |
| Example 9 | 79.1 | 81.9 | 75.9 | 81.8 |
| Example 10 | 80.2 | 80.2 | 78.8 | 79.9 |
| Example 11 | 80.5 | 78.9 | 78.5 | 81.8 |
| Embodiment 12 | 78.9 | 81.7 | 76.6 | 78.3 |
| Comparative Example 1 | 68.3 | 60.4 | 62.1 | 65.6 |
| Comparative Example 2 | 75.8 | 65.9 | 68.9 | 72.5 |
| Comparative Example 3 | 74.1 | 66.2 | 69.2 | 73.9 |
| Comparative Example 4 | 77.8 | 69.8 | 72.6 | 74.5 |

The relevant performance test results of the lithium-ion batteries prepared by Examples 1 to 12 and Comparative Examples 1 to 4 are shown in Table 1.

The negative electrode active material employed in the lithium ion battery provided in Comparative Example 1 was a silicon-carbon material without a coating layer, whereas the negative electrode active material employed in the lithium ion battery provided in Examples 1 to 12 was prepared by coating the silicon-based material with a copolymer formed by copolymerization reaction of a first monomer shown in Formula I and a second monomer such as shown in Formula II. The test results show that the lithium-ion batteries provided in Examples 1 to 12 have significantly higher Initial Coulombic Efficiency, capacity retention rate at room temperature and a rate of 1C/1C after 1200 cycles, constant current charge ratio at a rate of 6 C, and discharge capacity retention rate at a rate of 1C/10C than those provided in Comparative Example 1. The above results illustrate that, by coating the silicon-based material with a copolymer formed by copolymerization of the first monomer shown in Formula I and the second monomer shown in Formula II, the coating layer can play a good buffering effect on the volume expansion of the silicon-based material during the charge and discharge process, so that the negative active material is not prone to rupture during the expansion process, which improves the cycle lifespan and cycle capacity retention rate of lithium-ion batteries applying the negative active material during the actual use of the battery. Moreover, the coating layer can improve the electrical conductivity of the negative electrode active material to a certain extent, thereby improving the rate performance of the negative electrode active material and allowing the lithium ion battery to which it is applied to have excellent quick charging performance.

By comparing the test results of Examples 1, 4, 5, 6, 7, and 8, it can be illustrated that compared to the other structures of the first monomer and the second monomer, the negative electrode active material prepared in Example 1 by coating the silicon-based material with the copolymer formed by copolymerization reaction of the first monomer shown in Formula III and the second monomer shown in Formula IV has a better cycling and rate performance.

By comparing the test results of Examples 1, 9, and 10, it can be illustrated that the negative electrode active material prepared by coating the silicon-based material utilizing a copolymer with a number-average molecular weight in the range of 4,000 to 50,000 has a better cycling and rate performance.

## Claims

1. A negative electrode active material, comprising a silicon-based material and a coating layer disposed on a surface of the silicon-based material, wherein the coating layer contains a copolymer comprising: a first monomer as shown in Formula I; and a second monomer as shown in Formula II; 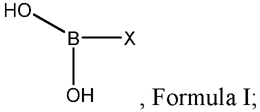 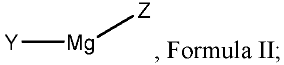
X in the Formula I and Y in the Formula II independently contain at least one of an aryl group and an alkenyl group; and
Z in the Formula II is selected from one of -Cl, -Br, -I.

2. The negative electrode active material according to claim 1, wherein a structure of the first monomer is as shown in Formula III, and a structure of the second monomer is as shown in Formula IV; 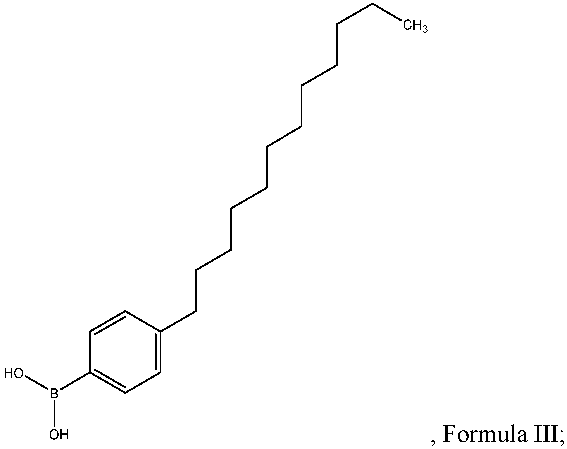 and

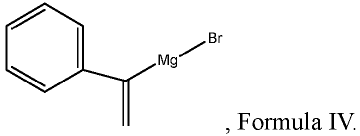

3. The negative electrode active material according to claim 1, wherein a number-average molecular weight of the copolymer is 4,000 to 50,000.

4. The negative electrode active material according to claim 1, wherein a mole ratio of the first monomer to the second monomer is in a range of (1-1.2): 1.

5. The negative electrode active material according to claim 1, wherein a mass percentage of the coating layer in the negative electrode active material is in a range of 2% to 8%, and/or, a thickness of the coating layer is in a range of 10 to 130 nm.

6. The negative electrode active material according to claim 1, wherein a particle size D₅₀ of the negative electrode active material is 4 to 9 µm, and/or, a specific surface area of the negative electrode active material is 1 to 8 m²/g.

7. The negative electrode active material according to claim 1, wherein the silicon-based material comprises at least one of silicon monoxide (SiO) and silicon-carbon material (SiC).

8. The negative electrode active material according to claim 7, wherein the silicon-carbon material comprises a porous carbon skeleton, a silicon layer, and a carbon layer.

9. The negative electrode active material according to claim 8, wherein the porous carbon skeleton including an inner region and an outer region wrapped around the inner region, the inner region having a plurality of inner pores, the outer region having a plurality of outer pores, the silicon layer being provided on an inner wall of the inner pores and the outer pores, and the carbon layer being provided on a surface of the silicon layer in the outer pores to enable the silicon-carbon particles to have inner pores in the inner region and outer pores in the outer region.

10. The negative electrode active material according to claim 9, wherein, in the inner and outer pores of the silicon-carbon material, the proportion of mesopores is 42% to 86%, and the proportion of micropores is less than 58%, in which a pore diameter of mesopores ranges from 3 to 40 nm, and a pore diameter of micropores ranges from 0.5 to 2 nm.

11. A preparation method of a negative electrode active material according to claim 1, comprising following steps:
S1: co-polymerizing the first monomer with the second monomer to prepare a copolymer;
S2: utilizing the copolymer to formulate a copolymer solution; and
S3: applying the copolymer solution to the surface of the silicon-based material, and drying the copolymer solution on the surface of the silicon-based material to form the coating layer on the surface of the silicon-based material.

12. The preparation method of the negative electrode active material according to claim 11, wherein the copolymer is prepared by following steps in the step S1:
S1-1: mixing the first monomer, the second monomer with alkali and catalyst and then reacting with reflux under inert gas protective atmosphere for 5 to 12 hours, to produce a prepolymer; and
S1-2: mixing the prepolymer with organic solvent and initiator and then reacting under inert gas protective atmosphere at 40 to 100 °C for 3 to 12 hours, to prepare the copolymer.

13. The preparation method of the negative electrode active material according to claim 11, wherein the step S3 comprises the following operations: mixing the silicone-based material with the copolymer solution and stirring at 30 to 80 °C for 4 to 10 hours to obtain the mixture, and spray-drying the mixture to prepare the negative electrode active material.

14. A negative electrode sheet, wherein the negative electrode sheet comprises a negative current collector and a negative electrode active coating disposed on a surface of the negative current collector, and the negative electrode active coating comprises the negative electrode active material according to any one of claims 1-10, or the negative electrode active material prepared by the preparation method of the negative electrode active material according to any one of claims 11-13.

15. A lithium-ion battery, wherein the lithium-ion battery comprises the negative electrode sheet according to claim 14.
